**Europäisches Patentamt**

**European Patent Office**

**Office européen des brevets**

(11) Numéro de publication : **0 406 034 B1**

(12) **FASCICULE DE BREVET EUROPEEN**

(45) Date de publication du fascicule du brevet :
**07.10.92 Bulletin 92/41**

(21) Numéro de dépôt : **90401328.1**

(22) Date de dépôt : **18.05.90**

(51) Int. Cl.⁵ : **B60J 5/04**

(54) **Panneau de garnissage intérieur d'une porte de véhicule, porte correspondante, et procédé de montage de la porte.**

(30) Priorité : **27.06.89 FR 8908550**

(43) Date de publication de la demande :
**02.01.91 Bulletin 91/01**

(45) Mention de la délivrance du brevet :
**07.10.92 Bulletin 92/41**

(84) Etats contractants désignés :
**DE ES GB IT SE**

(56) Documents cités :
**EP-A- 0 170 150**
**US-A- 4 662 115**

(73) Titulaire : **ROCKWELL AUTOMOTIVE BODY SYSTEMS-FRANCE EN ABREGE:ROCKWELL ABS-FRANCE**
**Tour Gan Cédex 13**
**F-92082 Paris La Defense 2 (FR)**

(72) Inventeur : **Bertolini, Carlo**
**192 Bd Voltaire**
**F-75011 Paris (FR)**
Inventeur : **Becceril, Philippe**
**15 rue du Bourgneuf**
**F-45150 Darvoy (FR)**
Inventeur : **Cardine, Patrice**
**1 rue Gustave Flaubert**
**F-45100 Orleans (FR)**

(74) Mandataire : **Martin, Jean-Paul et al**
**c/o CABINET LAVOIX 2, Place d'Estienne d'Orves**
**F-75441 Paris Cedex 09 (FR)**

**Description**

La présente invention a pour objet un panneau de garnissage intérieur d'une porte de véhicule, la porte de véhicule munie de ce panneau et un procédé de montage de cette porte.

On connaît des portes de véhicule dont les différents éléments intérieurs (lève-vitre, serrure, tringles, coulisse de guidage du bas de vitre, commande d'ouverture intérieure...) sont assemblés à travers le panneau formant une structure intérieure de la porte, puis sont recouverts intérieurement par un panneau de garnissage.

On connaît également des portes dites à cassettes, dans lesquelles les différents éléments précités sont préassemblés sur une platine en tôle, qui vient refermer en partie l'ouverture pratiquée dans le panneau intérieur. La mise en place du panneau intérieur de garnissage assure la finition de la porte par recouvrement de cette platine.

L'invention a pour but d'éviter la mise en oeuvre d'une platine intérieure tout en conservant le préassemblage des différents éléments.

Conformément à l'invention, le panneau de garnissage est muni, sur sa face tournée vers l'intérieur de la porte, de moyens de fixation et de préassemblage sur ce panneau d'éléments intérieurs de la porte, notamment lève-vitre, serrure, coulisse de guidage de la vitre en position basse, commande d'ouverture intérieure, tringle et ces éléments sont pourvus de moyens de fixation au panneau formant une structure intérieure de la porte.

La porte de véhicule ainsi réalisée est caractérisée en ce que lesdits éléments sont fixés, d'une part sur la face du panneau de garnissage tournée vers le panneau intérieur, et d'autre part sur ledit panneau intérieur après montage, lequel ainsi que le panneau de garnissage sont munis de moyens de fixation desdits éléments.

Cet agencement simplifie donc notablement la structure de la porte et diminue très sensiblement son prix de revient en supprimant la platine intérieure mentionnée précédemment. En outre, l'intervention sur l'un ou l'autre des éléments ou mécanismes intérieurs de la porte est rendue particulièrement aisée, puisqu'il suffit d'enlever le panneau de garnissage seul, en démontant sa liaison avec les différents éléments, qui restent par ailleurs fixés au panneau intérieur de la porte.

D'autres particularités et avantages de l'invention apparaîtront au cours de la description qui va suivre, faite en référence aux dessins annexés qui en illustrent une forme de réalisation à titre d'exemple non limitatif.

La figure 1 est une vue en perspective d'une porte de véhicule sans son panneau intérieur de garnissage mais ayant un panneau intérieur adapté pour y permettre la fixation des éléments ou mécanismes de la porte.

La figure 2 est une vue en perspective éclatée d'une forme de réalisation du panneau de garnissage de la porte et d'un certain nombre d'éléments qui peuvent y être fixés.

La figure 3 est une vue en perspective éclatée de la porte de la Fig.1 et du panneau de garnissage intérieur de la Fig.2 sur lequel les différents éléments ont été préassemblés,

La figure 4 est une vue en perspective éclatée à échelle agrandie de la serrure de la porte, de sa poignée d'ouverture, du barillet de serrure et des organes de liaison entre ces différents éléments.

La figure 5 est une vue en perspective du panneau de garnissage de l'intérieur du véhicule.

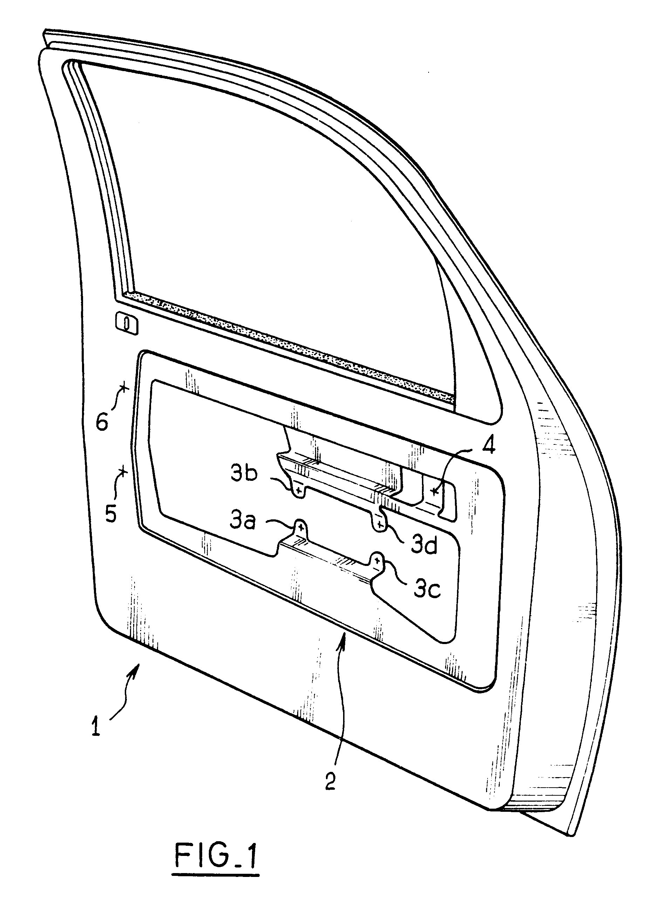

On voit à la Fig. 1 une porte 1 de véhicule automobile comprenant un panneau 2 formant une structure intérieure, pourvue de différents moyens 3a-3b, 3c-3d, 4, 5, 6 agencés pour permettre la fixation, sur ce panneau intérieur 2, d'un certain nombre d'éléments ou mécanismes intérieurs de la porte 1.

Les moyens 3a-3b et 3c-3d peuvent être, comme réprésenté, des oreilles découpées dans la tôle du panneau intérieur 2 et percées de trous taraudés de réception de vis non représentées. Il en est de même pour les points de fixation 4, 5 et 6 dont le rôle sera explicité ci-après.

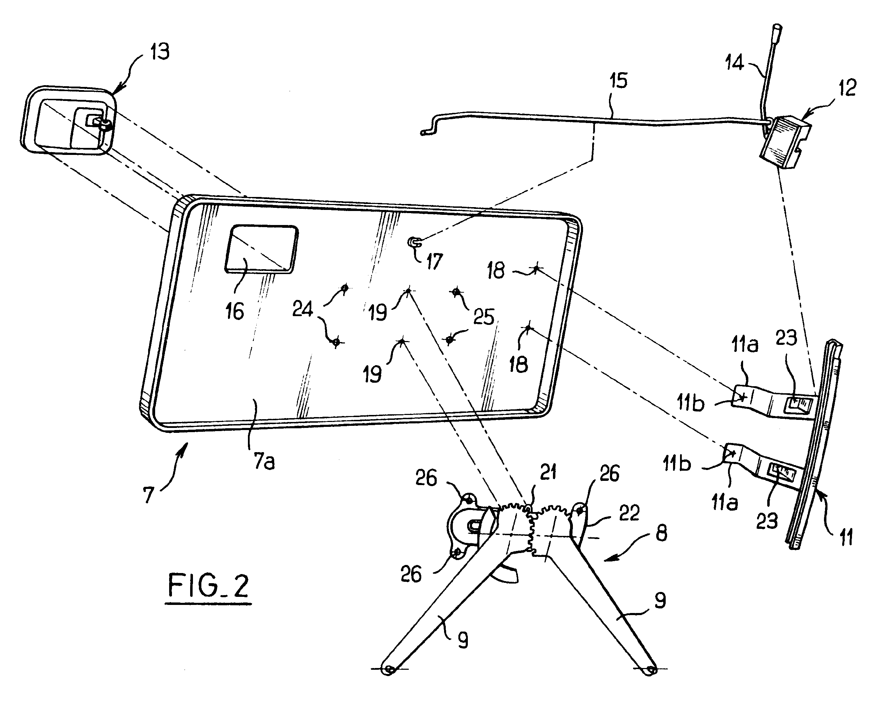

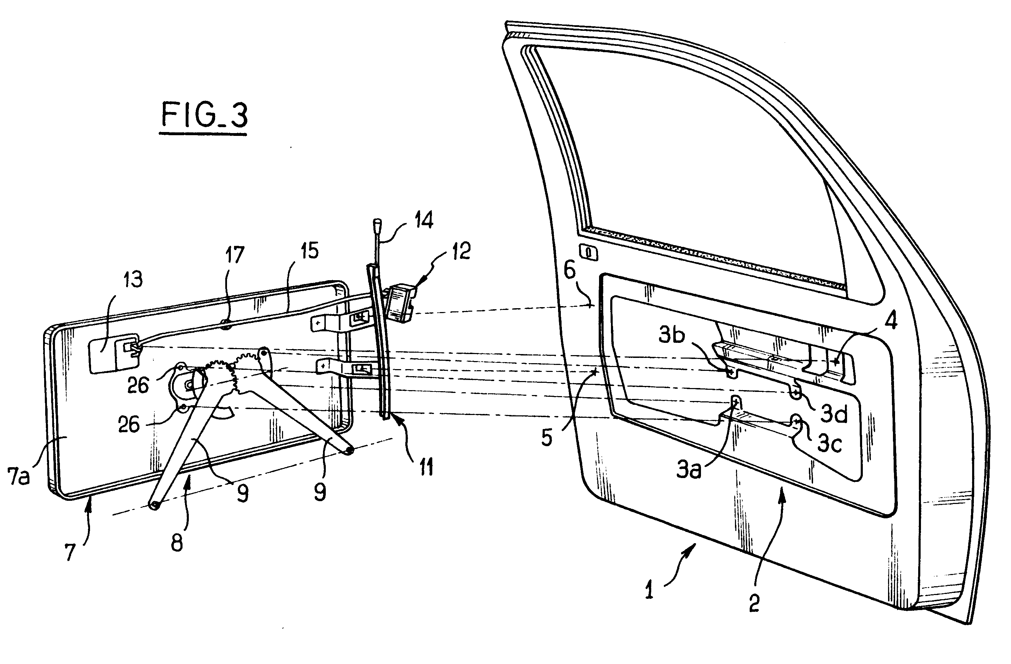

La porte 1 est complétée intérieurement par un panneau de garnissage 7, visible en particulier aux Fig.2 et 3, qui est muni, sur sa face 7a tournée vers l'intérieur de la porte 1, de moyens de fixation et de préassamblage des éléments intérieurs de la porte. Ces éléments ou mécanismes peuvent être notamment un lève-vitre 8 par exemple du type à bras oscillants 9, une coulisse arrière 11, connue en soi, et qui sert à guider la vitre en position basse, une serrure 12, une commande d'ouverture intérieure 13, 15, et une tringle 14 de condamnation-décondamnation de la serrure 12.

Le panneau de garnissage 7 est percé d'une ouverture 16 d'introduction de la commande d'ouverture intérieure 13, et muni d'une pince 17 de clipsage et de maintien de la tringle 15, disposée sur sa face intérieure 7a. Dans le panneau 7 sont de plus percés des trous 18 destinés à recevoir des organes de fixation de la coulisse 11 au panneau 7, tels que des vis traversant des trous taraudés 11b de deux pattes 11a de cette coulisse, et deux trous 19 pour des vis non représentées de fixation du lève-vitre 8 au panneau 7, traversant des trous taraudés 21 de la platine 22 du lève-vitre 8.

Complémentairement, les pattes 11a sont percées de trous taraudés 23, destinés à coopérer avec les trous 5 et 6 de l'encadrement du panneau 2. Ces derniers sont positionnés de manière à être en vis-à-vis des trous 23, lorsque le panneau de garnissage 7 sur lequel ont été préassemblés les différents éléments 8, 11, 13, 14, 15 doit être fixé sur le panneau intérieur 2. Enfin, dans le panneau de garnissage 7 sont percées, de part et d'autre des trous 19, deux paires de trous 24, 25 positionnés pour être en vis-à-vis de trous correspondants 26 ménagés aux extrémités opposées de la platine 22 du lève-vitre 8. Les trous 3a, 3b du panneau intérieur 2 sont positionnés pour être en vis-à-vis avec les trous 26 et 19 et de même pour les trous 3c, 3d et les trous 26, 25. Ainsi des vis peuvent traverser successivement les trous 19, 26, 3c, 3d d'une part et les trous 25, 26, 3a et 3b d'autre part, afin de fixer le lève-vitre 8 au panneau intérieur 2 de porte, après son préassemblage au panneau de garnissage 7.

De manière similaire, dans la commande d'ouverture intérieure 13 est percé un trou pouvant recevoir une vis non représentée, qui peut être vissée dans le trou taraudé correspondant 4 du panneau de porte 2.

Bien entendu les différents éléments représentés 8, 11, 12, 13, 14, 15 peuvent être complétés par d'autres mécanismes, et leur fixation sur le panneau 7 peut s'effectuer par tout moyen connu autre que des vis, par exemple des agrafes élastiques.

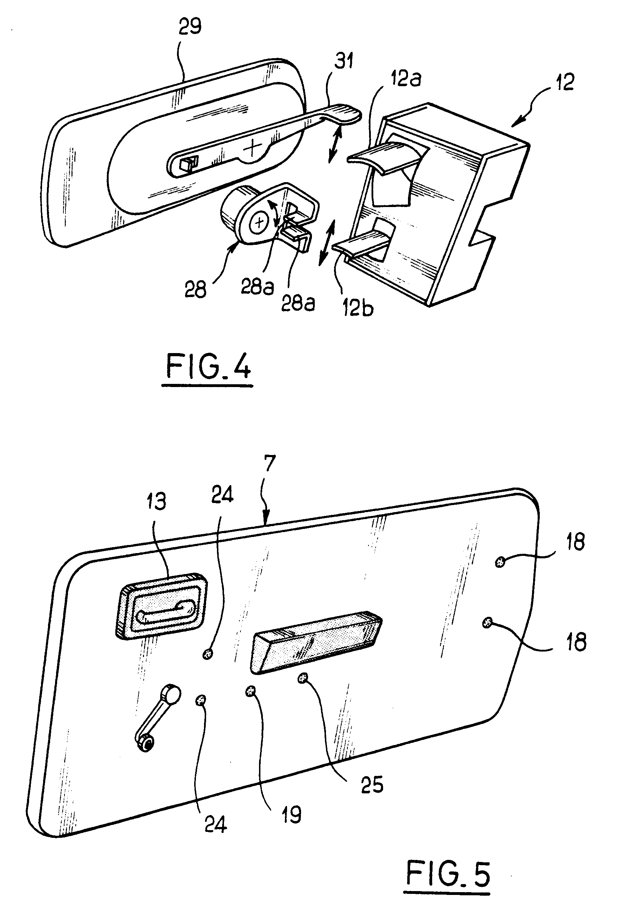

La serrure 12 est équipée de deux languettes 12a, 12b et d'un barillet 28, tandis que la poignée d'ouverture 29 comporte un levier 31. Le basculement de ce dernier vers le bas (double flèche sur la Fig.4) actionne la languette supérieure 12a pour permettre l'ouverture de la porte, tandis que la rotation du barillet 28 commande le déplacement de la languette inférieure 12b, introduite entre deux oreilles 28a du barillet 28, pour condamner ou décondamner la serrure 12.

Le procédé de montage de la porte qui vient d'être décrit s'effectue de la manière suivante.

On prémonte tout d'abord les différents éléments 8, 11, 12, 13, 14, 15 etc sur le panneau de garnissage 7 par introduction de la commande intérieure 13 dans l'ouverture 16, positionnement de la tringle 15 dans la pince élastique 17, vissage du lève-vitre 8 par des vis fixant le panneau de garnissage 7 par les trous 19, et les trous taraudés 21, et enfin la coulisse 11 par vissage de vis dans les trous 18 et les trous taraudés 11b. La serrure 12 est dans ce cas fixée sur la coulisse 11 par l'intermédiaire d'une patte auxiliaire non représentée.

Puis le module ainsi réalisé est monté sur la porte, par fixation du panneau 7 sur le panneau 2 par tout moyen connu, non représenté, par exemple agrafes élastiques, collage, vissage... Enfin on fixe les éléments 8, 11, 13 au panneau intérieur 2 par des vis comme décrit précédemment, traversant les trous 24, 25 du panneau 7, 26 du lève-vitre 8 et 3c, 3d, 3a, 3b du panneau 2. D'autres vis traversent les trous 23, 5 et 6 pour fixer la coulisse 11 à un chant du panneau intérieur 2.

De même la fixation de la serrure 12 au panneau intérieur 2 est obtenue par vissage de celle-ci sur le chant arrière de la porte 1.

Pour démonter le panneau de garnissage 7, afin de permettre des interventions sur les différents éléments intérieurs 8, 11..., on démonte au préalable seulement les liaisons entre le panneau 7 et les éléments 8, 11, puis la vis de liaison entre la commande 13 et le trou 4. On déconnecte ensuite la tringle 15 de la poignée de commande 13 et on retire le panneau 7, en laissant les éléments 8, 11, 12 fixés sur le panneau intérieur de porte 2, ce qui permet d'écarter le panneau 7.

Les interventions de maintenance ou de remplacement des éléments sont donc aisées, et la structure de la porte est simplifiée, ce qui diminue son prix de revient par rapport aux portes à platine intérieure.

**Revendications**

1. Panneau (7) de garnissage intérieur d'une porte (1) de véhicule, caractérisé en ce qu'il est muni sur sa face tournée vers l'intérieur de la porte, de moyens (19, 25, 18...) de fixation et de préassemblage sur ce panneau, d'éléments intérieurs (8, 11, 13, 14, 15) de la porte, notamment lève-vitre (8), serrure (12), coulisse (11) de guidage de la vitre en position basse, commande d'ouverture intérieure (13, 15), tringle (14), et ces éléments sont pourvus de moyens de fixation à un panneau (2) formant une structure intérieure de la porte.

2. Porte de véhicule, comprenant un panneau (2) formant une structure intérieure, un panneau intérieur (7) de garnissage, et des éléments intérieurs, notamment lève-vitre (8), serrure (12), coulisse (11) de guidage de la vitre en position basse, commande d'ouverture intérieure (13, 15), tringle (14), caractérisée en ce que lesdits éléments sont fixés, d'une part sur la face (7a) du panneau (7) de garnissage tournée vers le panneau intérieur (2), et d'autre part sur ledit panneau intérieur, lequel ainsi que le panneau de garnissage sont munis de moyens de fixation desdits éléments, par exemple des trous (24, 25, 18... 3a-3d, 4...) de passage de vis ou équivalents à travers le panneau de garnissage (7).

3. Procédé de montage d'une porte de véhicule, comprenant un panneau (2) formant une structure intérieure de la porte, un panneau intérieur (7) de garnissage, et des éléments intérieurs à la porte notamment lève-vitre (8), serrure (12), coulisse (11) de guidage de la vitre en position basse, commande d'ouverture intérieure (13, 15), tringle (14), caractérisé en ce qu'on préassemble les différents éléments sur le panneau de garnissage, à l'aide de vis, agrafes ou équivalents, on fixe le panneau intérieur (7) de garnissage ainsi équipé sur le panneau intérieur (2) de porte, et on fixe les différents éléments (8, 11...) au panneau intérieur de porte (2) ou à un chant de ce dernier, de telle sorte que les éléments précités restent fixés sur le panneau intérieur (2) après démontage du panneau de garnissage (7).

4. Procédé selon la revendication 3, caractérisé en ce qu'on fixe les éléments (8, 11...) au panneau intérieur (2) de porte par des trous de passage de vis ménagés dans le panneau intérieur de garnissage (19, 25...).

**Patentansprüche**

1. Innenverkleidungspaneel (7) einer Fahrzeugtür (1), dadurch **gekennzeichnet**, daß sie auf ihrer dem Inneren der Tür zugewandten Oberfläche mit Mitteln (19,25,18, ...) zur Befestigung und Vormontage von inneren Bauelementen (8,11,13,14,15) der Tür, insbesondere eines Fensterhebers (8), eines Schlosses (12), einer Führungskulisse (11) für die Fensterscheibe in abgesenkter Stellung, einer Innenbetätigung (13,15), einer Betätigungsstange (14), an diesem Paneel versehen ist und diese Elemente mit Mitteln zur Befestigung an einem Paneel (2) versehen sind, das ein inneres Strukturteil der Tür bildet.

2. Fahrzeugtür mit einem ein inneres Strukturteil bildenden Paneel (2), einem Innenverkleidungspaneel (7) und inneren Bauelementen, insbesondere einem Fensterheber (8), einem Schloß (12), einer Führungskulisse (11) für die Fensterscheibe in abgesenkter Stellung, einer Innenbetätigung (13,15), einer Betätigungsstange (18), dadurch **gekennzeichnet**, daß die genannten Bauelemente einerseits auf der dem Innenpaneel (2) zugewandten Oberfläche (7a) des Verkleidungspaneels (7) und andererseits auf dem genannten Innenpaneel befestigt sind, welches ebenso wie das Verkleidungspaneel mit Mitteln zur Befestigung der genannten Elemente, beispielsweise mit Löchern (24,25,18, ..., 3a-3d, 4, ...) für den Durchtritt von Schrauben oder dergleichen durch das Verkleidungspaneel (7) versehen ist.

3. Verfahren zur Montage einer Fahrzeugtür mit einem ein inneres Strukturteil der Tür bildenden Paneel (2), einem Innenverkleidungspaneel (7) und inneren Bauelementen der Tür, insbesondere einem Fensterheber (8), einem Schloß (12), einer Führungskulisse (11) für die Fensterscheibe in abgesenkter Position, einer Innenbetätigung (13, 15), einer Betätigungsstange (14), dadurch **gekennzeichnet**, daß man die verschiedenen Bauelemente auf dem Verkleidungspaneel mit Hilfe von Schrauben, Klammern oder dergleichen vormontiert, das in dieser Weise ausgestattete Innenverkleidungspaneel (7) an dem Innenpaneel (2) der Tür befestigt und die verschiedenen Bauelemente (8,11, ...) derart an dem Innenpaneel (2) der Tür oder an einer Kante des letzteren befestigt, daß die vorgenannten Elemente nach der Demontage des Verkleidungspaneels (7) an dem Innenpaneel (2) fixiert bleiben.

4. Verfahren nach Anspruch 3, dadurch **gekennzeichnet**, daß man die Bauelemente (8,11, ...) an dem Innenpaneel (2) der Tür befestigt mit Hilfe von Schraubenlöchern (19,25, ...), die in dem Verkleidungspaneel ausgebildet sind.

**Claims**

1. Inner trim panel (7) for a vehicle door (1), characterized in that it is provided on its face turned towards the inside of the door with means (19, 25, 18...) for the fastening and preassembly on this panel of internal elements (8, 11, 12, 13, 14, 15) of the door, in particular window lift (8), lock (12), slide (11) for guiding the window into the lowered position, inside opening control (13, 15) and rod (14), and these elements are provided with means for fastening to a panel (2) forming a structure inside the door.

2. A vehicle door, comprising a panel (2) forming an inside structure, an inner trim panel (7), and internal elements, in particular window lift (8), lock (12), slide (11) for guiding the window into the lowered position, inside opening control (13, 15) and rod (14), characterized in that the said elements are fastened, on the one hand, to that face (7a) of the trim panel (7) turned towards the inner panel (2) and, on the other hand, to the said inner panel, which inner panel and trim panel are provided with fastening means for the said elements, for example holes (24, 25, 18... 3a-3d, 4...) for the pasaage of screws or equivalent elements through the trim panel (7).

3. Method for mounting a vehicle door, comprising a panel (2) forming a structure inside the door, an inner trim panel (7), and elements inside the door, in particular window lift (8), lock (12), slide (11) for guiding the window into the lowered position, inside opening control (13, 15) and rod (14), characterized in that the various elements are preassembled on the trim panel by way of screws, fasteners or equivalent elements, the inner trim panel (7) thus equipped is fixed to the inner door panel (2), and the various elements (8, 11...) are fixed to the inner door panel (2) or to an edge of the latter such that the abovementioned elements remain fixed to the inner panel (2) after the trim panel (7) has been disassembled.

4. Method according to Claim 3, characterized in that the elements (8, 11...) are fixed to the inner door panel (2) by holes for the passage of screws, which holes are arranged in the inner trim panel (19, 25...).

FIG.1

FIG_2

FIG.3

EP 0 406 034 B1

FIG.4

FIG.5